# EUROPEAN PATENT APPLICATION

(11) **EP 1 657 580 A1**
(43) Date of publication of application: **17.05.2006**
(21) Application number: 04292675.8
(22) Date of filing: 11.11.2004
(51) Int. Cl.: G02B 21/24, G02B 27/32, G01B 11/00, G01C 3/00, G02B 21/00

(54) **Optical device for determining the in-focus position of a fourier optics set-up**

(71) Applicant: ELDIM SA, 14200 Herouville Saint-Clair (FR)
(72) Inventor: Leroux, Thierry, 14000 Caen (FR)
(74) Representative: Grünecker, Kinkeldey, Stockmair & Schwanhäusser Anwaltssozietät

(57) **Abstract**

The invention relates to an optical device (31) for determining the in-focus position of a Fourier optics set-up (3,9,13) comprising: a beamsplitter (33), a numerical aperture delimiting diaphragm (35), an imaging system (41,43), and a one or two dimensional detector (45), which are arranged and configured such that the detector is at an optically conjugated position with respect to the in-focus position (37a) of the Fourier optics set-up and such that the field of view of the optical device is larger than an illumination spot size or light emission spot size on the surface of a sample to be positioned in the in-focus position of the Fourier optics set-up, wherein the beamsplitter has a predetermined angle (δ) configured to select a light beam emitted from the surface (7) of the sample (5) under a predetermined emission angle (α) in conjunction with the numerical aperture delimiting diaphragm and the imaging system to direct the selected light beam onto the detector such that depending on the position of the sample (63,65,67) with respect to the in-focus position of the Fourier optics set-up the selected light beam is detected at different positions (63b,65b,67b) on the one or two dimensional detector. The invention further more relates to a corresponding method for determining the in-focus position. In addition an imaging device and a Fourier optics set-up comprising the optical device and/or at least two imaging devices are provided. The imaging devices can further comprise a beamsplitter exchange unit comprising a plurality of beamsplitters with different predetermined angles.

## Description

The invention relates to an optical device for determining the in-focus position of a Fourier optics, an imaging device for a Fourier optics set-up and a Fourier optical set-up comprising the optical device and/or the imaging device.

Fourier optics based optical instruments are powerful tools taking advantage of the properties of the Fourier transformation in order to simultaneously collect all the light coming from a sample and to transform angular information in positional information on a measurement sensor. The Fourier optics based optical instruments find their application in the field of emissive samples like flat panel displays or non emissive samples like silicon wafers used in the fabrication process of micro-electronic circuits and are, e.g., used for contrast determination or reflectometry and ellipsometry measurements of thin films as well as CD metrology.

These Fourier optics based optical instruments comprise a first optical system, like a convergent objective, to form a Fourier transform image of a sample surface in its focal image plane and a second optical system, like a convergent objective, to project the Fourier transform image onto a two dimensional detector array. Each of the objectives may be a single optical element or comprise a plurality of lens elements. Examples of such instruments are disclosed in FR2613830 and FR2749388.

In particular in the field of microelectronics, where the dimensions of the structures become smaller and smaller, it is mandatory to position the measurement spot accurately on the surface of the sample and to adjust the distance between the Fourier optics set-up and the sample surface.

It is therefore the object of this application to provide an optical device and method capable of detecting the position for which the sample surface is positioned at the correct distance with respect to the Fourier optics set-up. In addition, it is the object to provide a practical solution for accurately positioning the measurement spot on the sample surface.

This object is achieved with the optical device according to claim 1 and the corresponding method according to claim 19 and the imaging device according to claim 14. Further advantageous embodiments of the invention are according to the dependant claims. The object is further achieved with Fourier optics set-up according to claim 16 and 17.

Accordingly an optical device for determining the in-focus position of a Fourier optics set-up, comprising: a beamsplitter, a numerical aperture delimiting diaphragm, an imaging system and a detector, which are arranged and configured such that the detector is at an optically conjugated position with respect to the in-focus position of the Fourier optics set-up, wherein the beamsplitter has a predetermined angle configured to select a light beam emitted from the surface of a sample to be positioned in the in-focus position of the Fourier optics set-up, under a predetermined emission angle in conjunction with the numerical aperture delimiting diaphragm and the imaging system to direct the selected light beam in the direction of the detector, such that the signal measured by the detector varies as a function of the position of the sample with respect to the in-focus position of the Fourier optics set-up.

The optical device according to claim 1 is positioned in the optical path of the Fourier optics, which are arranged and configured as described above, such that the beamsplitter reflects at least part of the light coming from the sample after having travelled through the first and second objective in the direction of the remaining elements of the optical device. Here the term beamsplitter has to be understood in a large sense and therefore also comprises e.g. a removable mirror or any other means suitable to reflect or redirect light coming from the sample in the direction of the remaining elements of the optical device.

Now, the beamsplitter angle in conjunction with the numerical aperture delimiting diaphragm, and as a consequence the corresponding emission angle, are such that the detected light beam changes its position with respect to the detector depending on the position of the sample with respect to the in-focus position of the Fourier optics set-up. As a consequence the measurement signal detected by the detector will depend on the position of the sample. This feature can then be exploited to identify the in-focus position, e.g. by comparing the measured signal, like for example its intensity, with a predetermined signal corresponding to a previously calibrated in-focus signal. Thus using the optical device the in-focus position of the Fourier optics set-up can be detected.

The optical device may be integrally formed with the Fourier optics set-up or as an independent module which can be mount onto or into the Fourier optics set-up.

In this context predetermined emission angle is not limited to light being directly emitted from the sample but also comprises light leaving the sample after having been illuminated, thus also reflected, diffracted, transmitted or diffused light falls under this term. Furthermore it will be clear to the person skilled in the art that depending on the opening size of the numerical aperture delimiting diaphragm the term "only under a predetermined emission angle" has to be understood as comprising a range of angles around this emission angle which passes through the diaphragm. Moreover it will be clear to the person skilled in the art that the surface of the sample shall be essentially parallel to the focus plane.

Advantageously the detector of the optical device can be at least a one dimensional detector and the field of view of the optical device can be larger than an illumination spot size or light emission spot size on the surface of the sample such that depending on the position of the sample with respect to the in-focus position of the Fourier optics set-up the selected light beam is detected at different positions on the at least one dimensional detector.

As the field of view of the optical device is larger than the illumination spot size on the sample, in case of a non emissive sample, or the light emission spot size, in case of an emissive sample, the spot observed on the detector is smaller than the overall detector area. By comparing the position of the light beam with a previously determined in-focus position of the Fourier optics set-up, the position for which the sample is in-focus can now be easily determined. The further the beam spot on the detector is away from the in-focus position the more the sample is out of focus. By moving the sample surface in the direction of the focus plane of the first Fourier objective the beam spot on the detector will approach the in-focus position. Thus the sample can be brought into focus, so that the measurements carried out by the Fourier optics set-up can be carried out in an optimised setting.

Preferably the optical device can further comprise a sample illumination device configured to illuminate the sample with two light beams under two different incident angles, wherein a first incident angle is chosen such that, on the detector, the detected position of the corresponding light beam emitted from the sample is essentially independent of the position of the sample with respect to the in-focus position of the Fourier optics. This fixed beam position can be advantageously used to determine the in-focus position of the sample without having to calibrate the device beforehand. Namely the sample is in focus when the fixed beam spot on the detector is in agreement with the beam spot of the second beam, for which the incident angle has been chosen such that the beam position can change as a function of the sample position. Thus the invention provides an autocalibrated system.

Here the sample illumination device can be shared with the Fourier optics set-up itself, thus both be used for illuminating the sample for focusing matters and for measuring. in addition the illumination device and the optical device may share some of their elements.

Advantageously the first incident angle can be essentially zero degree with respect to the normal of the sample surface. This set-up is of particular interest when the sample is a diffusing sample, e.g. a good Lambertian diffuser. In this case the predetermined angle of the beamsplitter can be chosen to be 45° with respect to the optical axis of the Fourier optics set-up. Then light leaving the sample in the direction of the normal comprises normal incidence light and light arising from the non-normal incidence light corresponding to the second incidence angle, such that the detector receives both the fixed beam as well as the beam dependent on the position of the sample relative to in-focus position via the numerical aperture delimiting diaphragm. Thus for a light diffusing sample the in-focus position can be automatically calibrated using an optical device with one beamsplitter and one numerical aperture delimiting diaphragm.

According to a preferred embodiment the two light beams can have different colour with respect to each other. Thus by using a colour sensitive detector, e.g. colour CMOS camera, the two light beams of different colour can be detected on separated colour channels, which facilitates the further data treatment to obtain the in-focus position.

Preferably the illumination device can be further configured such that the colours of the two light beams are adjustable. This feature is of particular interest when the sample comprises thin film structures for which depending on film thickness and material the incident light beam may or may not be reflected off again from the sample due to interference effects. Thus the possibility to change the colour of the incident light overcomes this sample related problem. Suitable light sources are for example colour adjustable LEDs.

As variant or in addition to changing the colours of the light beam to overcome the negative impact of interference effects the second incident angle can be adjusted. In this case a corresponding change in the beamsplitter angle and/or the position of the numerical aperture delimiting diaphragm becomes necessary, to thereby allow light of different predetermined emission angle to hit the detector.

According to a preferred embodiment the optical device can further comprise a second numerical aperture delimiting diaphragm and a second imaging system, configured and arranged such that in conjunction with the predetermined angle of the beamsplitter the light beam corresponding to the first incident angle reaches the detector via the first numerical aperture delimiting diaphragm and the first imaging system, whereas the light beam corresponding to the second incident angle reaches the detector via the second numerical aperture delimiting diaphragm and the second imaging system. In the case of reflective samples, like for example Si wafers with micro electronic circuits, this arrangement also provides the advantages of self calibration as the light beam corresponding to the first incident angle is detected via the first and the light beam corresponding to the second incident angle by the second numerical aperture delimiting diaphragm and optical system.

Preferably the first or second imaging system can comprise a mirror and a beamsplitter configured and arranged such that the light beam corresponding to the first incident angle and the light beam corresponding to the second incident angle recombine prior to reaching the detector. Thus only one detector is needed and eventually the first and second optical system may share some optical elements. Thus the total amount of elements can be kept small to keep the costs for the optical device low.

Advantageously the optical device can further comprise an image analysing unit configured to receive electrical signals from the detector which are proportional to the light intensity distribution detected, and configured to determine the position of the light beam(s) emitted from the sample. In particular, the image analysing unit may further be configured to determine the in-focus position of the sample by comparing the positions of the two light beams on the detector. Thus the in-focus position can be automatically determined, thereby creating an autofocusing device.

Preferably the image analysing unit can further comprise an interface configured to output the in-focus position of the sample to the Fourier optical set-up. Thus a sample holder being part of the Fourier optical set-up can be controlled such that the sample surface is moved in the correct position with respect to the in-focus position so that the optical device serves as an autofocusing unit bringing automatically the sample in the correct position to optimise the measurements of the Fourier optical set-up.

Advantageously the numerical aperture delimiting diaphragm can be adjustable. With an adjustable numerical aperture delimiting diaphragm the light intensity of the light beam(s) detected can be adjusted to optimise the in-focus determination.

According to a further variant the optical device can further comprise an adjustable field of view delimiting diaphragm. The field of view delimiting diaphragm is located to be optically conjugated with a given area on the surface of the sample and the imaging system is then arranged and configured such that the field of view of the diaphragm is re-imaged onto the detector. When the sample is positioned in the in-focus position, the optical device can thus, in addition to determining the in-focus position for a sample, also be used in an imaging mode for e.g. carrying out pattern recognition for thin films or CD (critical dimension) metrology and with the adjustable field of view the measurement spot on the sample can be adapted.

Preferably the imaging system comprises two objectives arranged and configured such that the field of view diaphragm plane is re-imaged on the detector. In particular the elements are arranged in the order: beamsplitter, field of view delimiting diaphragm, first objective, numerical aperture delimiting diaphragm, second objective and detector.

The invention furthermore relates to an imaging device according to claim 14 for a Fourier optics set-up, like defined beforehand. Accordingly the imaging device comprises: a beamsplitter, an adjustable field of view delimiting diaphragm, an adjustable numerical aperture delimiting diaphragm, an imaging system and a two dimensional detector. These elements are arranged and configured such that the detector is at an optically conjugated position with respect to a sample focus position of the Fourier optics based optical set-up, and wherein the beamsplitter has a predetermined angle configured to select a light beam emitted from the surface of the sample under a predetermined emission angle in conjunction with the numerical aperture delimiting diaphragm and the imaging system to thereby image the surface of the sample along the direction corresponding to the predetermined emission angle.

With this optical arrangement it becomes possible to image the surface of the sample positioned on a sample holder of the Fourier optics set-up onto the detector. The imaging device has the advantage that it can independently define: a) the direction along which the sample will be imaged by choosing the beamsplitter angle accordingly, b) the field of view using the adjustable diaphragm optically conjugated with a given observation area on the surface of the sample, and c) the angular aperture of the imaging device using the adjustable diaphragm which is optically conjugated with the first Fourier plane of the Fourier optics set-up. For example with a beamsplitter orientated at 45° with respect to the optical axis of the Fourier optics set-up the imaging device can be used for pattern recognition for thin films or CD measurements. Thus in addition to the Fourier transform related measurements the Fourier optics set-up comprising the imaging device can also provide images of the sample under study, wherein measurement spot on the sample surface can be accurately positioned.

Advantageously the imaging device can further comprise a beamsplitter exchange unit comprising a plurality of beamsplitters with different predetermined angles such that depending on which beamsplitter is positioned in the light beam emitted from the surface of the sample the surface of the sample is imagined along the direction corresponding to the predetermined emission angle of the beamsplitter. With the beamsplitter exchange unit the flexibility of the system is further enhanced.

The invention furthermore relates to a Fourier optics set-up comprising an optical device for determining the in-focus position of the Fourier optics set-up. Preferably the Fourier optics set-up comprises an optical device according to anyone of the above described embodiments and/or at least one imaging device according to one of the above described embodiments. Using the optical device the in-focus position of a sample to be analysed by the Fourier optical set-up can be easily determined. Furthermore, besides analysing the angular light distribution by means of the Fourier optics, the set-up can, in addition or as a variant, be used to image the surface of the sample. Imaging can be carried out for finding the test pattern on the sample which one wants to analyse or to carry out CD metrology.

Preferably the Fourier optics set-up comprises two imaging devices, wherein one imaging device has a large field of view, in particular a field of view in a range of 0.75mm*0.75mm to 1.5mm*1.5mm, and wherein the second imaging device has a smaller field of view, in particular a field of view in a range of 50µn*50µm to about 250µm*250µm. In a wafer inspection application the imaging device with the large field of view can be employed to find the exact orientation of the wafer and the imaging device with the small field can be used to visualize the pattems one is interested in. To bring the wafer in focus the optical device can be used. Thus this system is capable of fulfilling all the requirements of microelectronics applications in terms of pattern recognition and auto focusing.

The invention furthermore relates to a method according to claim for determining the in-focus position of a Fourier optical set-up comprising a sample holder, a first and a second optical system, a measurement sensor and an optical device as described beforehand. These elements are configured and arranged such that the first optical system forms a Fourier transform image of a surface of a sample positioned on the sample holder on its focal image plane, that the focal image plane of the first optical system is imaged by the second optical system onto the measurement sensor, and that the sample holder and the first optical system can be moved relative to each other. The inventive method comprises the step of moving the sample holder together with a sample positioned thereon with respect to the first optical system until the position of the light beam on the detector corresponds to a predetermined position indicating the in-focus position of the sample with respect to the first optical system. In combination with the inventive optical device the method for determining the in-focus position allows in a simple and reliable way to find an optimised alignment of the sample surface with respect to the in-focus position.

Advantageously the in-focus position can be determined by the position of the light-beam whose position on the detector is independent of the position of the sample with respect to the in-focus position of the Fourier optics when the optical device with autocalibrating capability is employed.

Embodiments of the invention are illustrated in the drawings and are explained in following in detail. It is shown in:
- Fig. 1: schematically a conventional Fourier optical set-up, for analysing angular resolved properties of a sample positioned in the focal plane of a first Fourier objective,
- Fig. 2a: schematically a Fourier optical set-up comprising an optical device according to a first embodiment of the invention,
- Fig. 2b: illustrates the results observed at a detector being part of the optical device according to the first embodiment,
- Fig. 3a: schematically a Fourier optical set-up comprising an optical device according to a second embodiment of the invention, wherein an illumination device is used for illuminating a sample under two different incident angles, and which is in particular useful for diffusing samples,
- Fig. 3b: illustrates the results observed at the detector being part of the optical device according to the second embodiment,
- Fig. 4a: schematically a Fourier optical set-up comprising an optical device according to a third embodiment of the invention, wherein an illumination device is used for illuminating a sample under two different incident angles, and which is in particular useful for reflective samples,
- Fig.4b: illustrates the results observed at a detector being part of the optical device according to the third embodiment,
- Fig. 5: schematically a Fourier optical set-up comprising an imaging device according to a fourth embodiment of the invention, used for imaging the surface of the sample.

In the following figures light paths are shown in the Figures to illustrate the way the different optical arrangements function. However, these light paths only represent guides for the eye and should be taken to correspond exactly to the laws of optics.

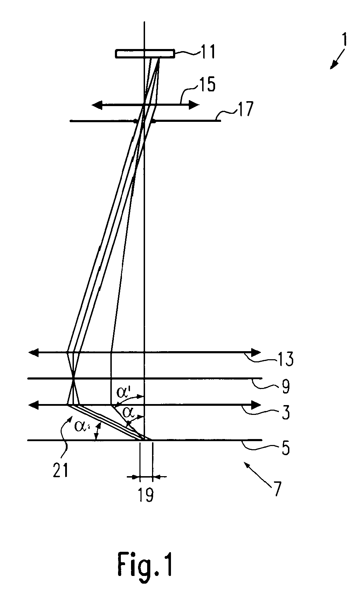

A known Fourier optical set-up 1, like disclosed in detail in FR2613830, is recalled in Fig. 1. This set-up comprises a first optical system, a first convergent objective 3 for forming the image of a Fourier transform of a surface 5 of a sample 7 to be analysed in its Fourier plane 9. The focal image plane or Fourier plane 9 is re-imagined on a measurement sensor 11, usually a representing a one- or two-dimensional array of detectors, like a CMOS camera, using a field lens 13 and relay optics 15, building-up a second convergent objective (second optical system). A diaphragm 17 is positioned to be optically conjugated with the measurement area 19 on the surface 5 of the sample 7. It is used to adjust the measurement spot size 19 independently of the angular aperture of the set-up.

Here the sample 7 can be a display which itself emits light, or can be a non-emissive sample, like for example wafers (e.g. Si wafers) used to fabricate microelectronic circuits. Non-emissive samples are illuminated by an additional illumination device (not shown). For transmissive samples illumination can also occur from the backside. A typical illumination device is for example disclosed in FR2749388. Usually the sample is place on a sample holder (not shown), which can be moved along the six degrees of freedom, which allows to correctly align the sample surface 5 with respect to the optical set-up. In the following it is assumed that the surface 5 of the sample 7 is at least aligned parallel with respect to the focal plane of the first Fourier lens, the convergent objective 3.

Light 21 coming from a given part of the surface 5 of the sample 7 and under a given emission angle α is focused on the first Fourier plane 9 by the Fourier lens 3. This Fourier plane 9 is re-imagined onto the measurement sensor 11 using the field lens 13 and the relay optics 15. As a consequence light 21 emitted from the sample 7 is focused on a predetermined position 23, 25 on the measurement sensor 11 for each emission angle α, α'.

The two main interests of such an optical set-up are: The ability to measure simultaneously light coming from the sample 7 for a large range of incidence angles and all the azimuthal angles, and the possibility to adjust independently the angular aperture of the system and the size of the zone measured on the sample so as to be able to integrate the light coming from various sizes of measurement areas 19.

This kind of optical set-up has been successfully employed to characterise the emission characteristics of displays, like contrast measurements, but also to characterise micro-electronic structures. As an example the Fourier optical set-up can be used to measure an entire diffraction pattern of a test grating and to deduce the grating profile thereof using appropriated simulations.

For microelectronic applications, it is important to work with a large range of incidence angles (about 0 to 80°) and to reduce the measurement spot size 19 to very small dimensions in order to match with the size of test patterns generally applied to wafers, e.g. Silicon wafers. For the use in microelectronics, for example, the measurement spot size 19 must fit with that of the test pattern, the dimensions of which become smaller and smaller. Today measurement spot sizes smaller than about 20µm are required.

The main difficulty is that the measurement spot 19 must be positioned very accurately on the surface 5 of the sample 7 and that the distance between the optical elements and the sample surface 5 must be precisely adjusted, so that the surface 5 of the sample 7 is positioned in-focus with respect to the first Fourier lens 3.

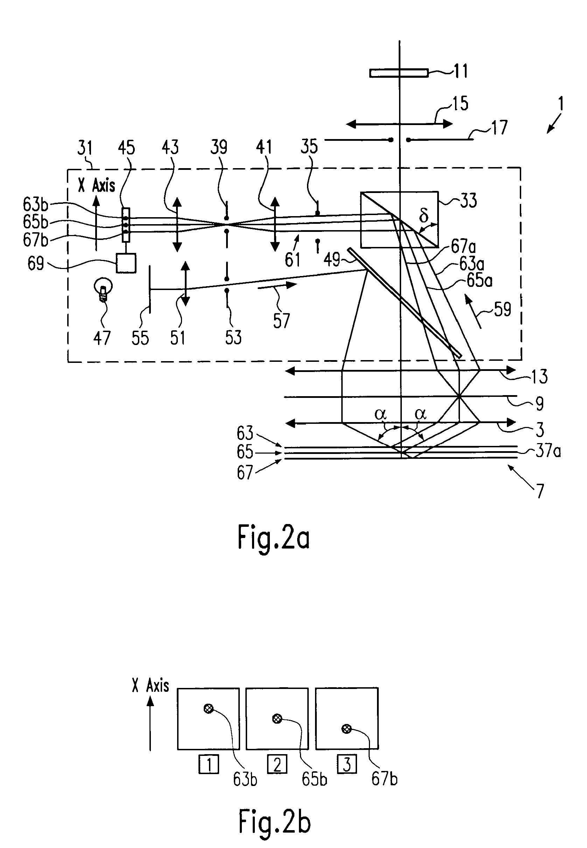

Fig. 2a illustrates a fist embodiment of an optical device 31 according to the present invention, which serves to identify the position for which the surface 5 of the sample 7 is in-focus wit respect to the Fourier optical set-up 1. The optical device 31 comes in addition to the Fourier optical set-up 1 already illustrated in Fig. 1, the description of its elements which are illustrated in Fig. 2 with the same reference numerals and their features are not repeated again, but are incorporated herewith by reference. The optical device can be integrally formed with the Fourier optics set-up 1 or be an optical module on its own which can be mount onto the Fourier optics set-up 1. In the following the description will be made for the optical device 31 in the state of being mount onto or into the Fourier optics set-up 1.

The optical device 31 comprises a beamsplitter 33 of a predetermined angle δ, a field of view delimiting diaphragm 35, arranged on the optical path to be essentially optically conjugated with the in-focus position 37a, a numerical aperture delimiting diaphragm 39, essentially optically conjugated with the first Fourier plane 9, and an imaging system comprising, in this embodiment, a set of two lenses 41, 43 used to re-image the field diaphragm 35 plane onto a second one- or two-dimensional detector 45, e.g. a CMOS camera, but also a position sensitive detector may be used (PSD). Instead of a beamsplitter 33 also a retractably arranged mirror or any other suitable optical element may be used.

In this embodiment the optical device 31 also comprises an illumination device comprising a light source 47 to illuminate the sample 7 under a given incidence angle α with respect to the surface normal of the sample 7. The illumination device further comprises a second beamsplitter 49, a second relay lens 51 and a diaphragm 53. However, other illumination devices providing an illumination beam of a predetermined incidence angle α may also be employed instead.

In this first embodiment the diaphragm 53 is sufficiently small compared to the field of view delimiting diaphragm 35. In a practical example diaphragm 53 may have a diameter of 20µm whereas the field of view has a diameter of about 200µm.

The optical device 31 works as follows. The light source 47, e.g. a LED, is positioned in plane 55 which due to the second relay lens 51 is optically conjugated with the Fourier plane 9 such that the position of the light source in the plane 55 and its size define under which angle α and in which range around this angle α the sample 7 is illuminated. The diaphragm 53 is used to define the illumination spot size on the sample. To reduce the angular range under which the illumination beam 57 hits the sample 7 the light source can also be a LED in combination with an optical fiber.

The light beam 57 is reflected by the surface 5 of the sample 7 and leaves the sample 7 under the emission angle α. At least part of the reflected light beam 59 is then deviated by the beamsplitter 33. The beamsplitter angle δ is chosen such that in combination with the numerical aperture delimiting diaphragm 39 and the imaging system the deviated light beam 61 reaches the detector 45. Note that the size of the diaphragm 39 determines the angular range around the emission angle α that also reaches the detector 45.

Using the optical device 31 the in-focus position 37a of the sample according to the inventive method can be determined in the following way. It is in fact the position of the light beam 61 on the detector 45 that can be used to precisely determine the in-focus position, thus the distance between the optical elements of the Fourier optics set-up 1 and the sample surface 5. Fig 2a shows three different sample positions 63, 65, 67 and their corresponding reflected light beams 63a, 65a, 67a. Due to the different distance to the first convergent objective 3 and the oblique incidence of the illumination light beam 57 the three light beams 63a, 65a and 67a arise and reach the detector 45 at three different positions 63b, 65b, 67b. Fig. 2b shows the position of the three beams 63a, 65a, 67a on the detector, here a CMOS camera.

After a calibration of the system, the spot position on the detector 45 for the in-focus position 37a is known. Thus by comparing the spot positions 63b, 65b and 67b with the calibrated position one will know how to move the sample 5 until the spot position on the detector 45 will correspond to the in-focus position 37a of the Fourier optics set-up 1. In this situation the sample surface 5 is correctly positioned such that the further measurements can be carried out in an optimised setting. With a typical resolution for a two dimensional detector 45, like a CMOS camera, of 1000^{*}1000 pixels and accuracy of better than 5µm, in particular of better than 1 µm, can be achieved.

According to a variant the optical device 31 can comprise an image analysing unit 69 which receives and analyses the electrical signals which it receives from the detector 47. It is used to automatically determine the spot positions 63b, 65b, 67b, to compare it with the calibrated in-focus position. The relative position of the sample 5 with respect to the in-focus position 37a can then be communicated to the user or the positional information can be directly communicated to the Fourier optical set-up 1 and be used to automatically move the surface 7 of the sample 5 in the correct in-focus position 37a.

According to a further variant the numerical aperture delimiting diaphragm 39 is adjustable, such that the intensity of the spot on the detector 45 can be optimised. Also the field of view delimiting diaphragm 35 may be an adjustable device, which will be of importance if the optical device is also employed as in imaging device which will be described later.

According to yet another variant the illumination light path and the measurement light path can be at least partially combined to, thereby sharing some of the optical elements.

Furthermore the field of view diaphragm 35 could also be omitted.

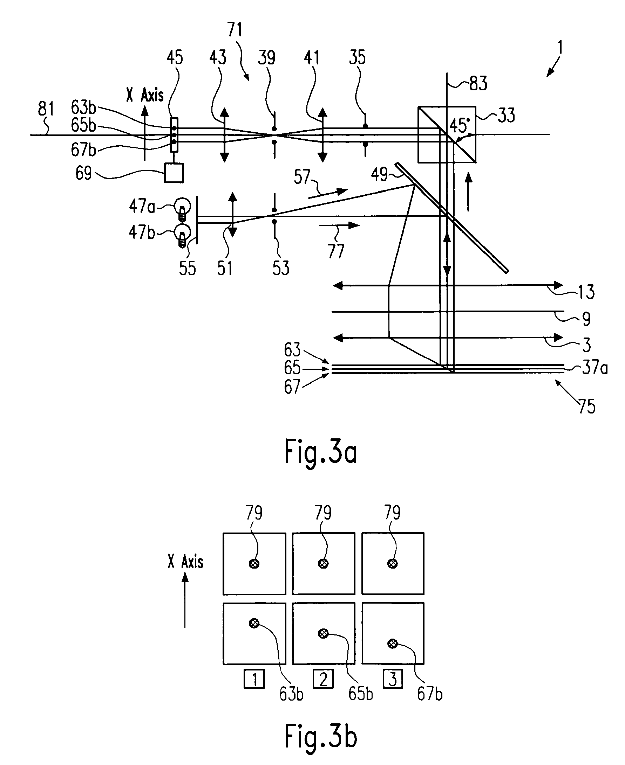

Fig. 3a illustrates a second embodiment of an optical device 71 according to the invention. The main difference of the second embodiment 71 compared to the first embodiment 31 illustrated in Fig. 2 is that the sample 5 is illuminated with two light beams 57, 73 under two different incident angles, and that the sample 75 is not of a reflecting type but of a diffusing type, like e.g. a Lambertian diffuser. Elements with the same reference numerals as employed in Fig. 2 and their features correspond to the ones of the first embodiment and are therefore not described again, but their description is incorporated herewith by reference. Parts of the Fourier optics set-up 1 have been omitted in Fig. 3a.

Here the incidence angle of the second light beam 77 is zero degree with respect to the surface normal of the sample 75. To let the normal incidence light beam 77 reach the detector 45, the beamsplitter angle δ is chosen to be 45° (with the optical axis 81 of the detection part of the optical device being arranged at 90° with respect to the optical axis 83 of the Fourier optics set-up). With the sample 75 being of a diffusing type also light of the light beam 57 will be emitted from the sample 75 in the direction of the surface normal so that with δ=45° also light corresponding to light beam 57 will reach the detector 45.

Using two beams 57, 73 has the advantage that the optical device can be autocalibrated. Actually, whereas incident light beam 57 has the same properties as the one shown in Fig. 2, thus leading to different spot positions 63b, 65b, 67b depending on the position of the sample 63, 65, 67 with respect to the in-focus position 37a, the second beam 77 hits the sample 75 under such an incidence angle that the detected position 79 (see Fig. 3b) on the detector 45 is constant, thus independent of the position 63, 65, 67 of the sample 75. In this case the surface of sample 75 is in the correct in-focus position 37a of the Fourier optics set-up 1 when the spot position of the normal incidence beam 77 and the oblique incidence beam 57 coincide. The necessary data analysis of comparing the positions of the two light beams 57, 77 on the detector 45 can be carried out by image analysing unit 69. Again the positional data can be used to automatically (autofocus) move the sample surface into the in-focus position 37a.

Using this embodiment the inventive method for determining the in focus positioning of the sample can use the fixed position 79 on the detector 45 to determine the in-focus position of the Fourier optics set-up.

The two light beams 57 and 77 can be achieved by placing two light sources 47a, 47b, e.g. two LEDs, at different positions in the Fourier plane 55 or by using a spatially extended light source with a mask comprising two openings.

According to a variant the two light sources 47a, 47b emit different colours respectively. In combination with a colour CMOS camera as detector 45 the two light beams of different wavelengths can be detected on separated colour channels to thereby facilitate the data analysis.

According to a further variant the two light sources 47a, 47b are such that their colours are adjustable. To do so colour filters or similar elements could be positioned in the corresponding beam paths. The possibility to change the colour of the incident light is especially of interest when thin film structures are to be analysed, as due to interference effects the sample may not emit light of certain wavelengths. It is also a possibility to adjust the incidence angle and at the same time the beamsplitter angle and/or the position of the diaphragm 39 to overcome interference effects.

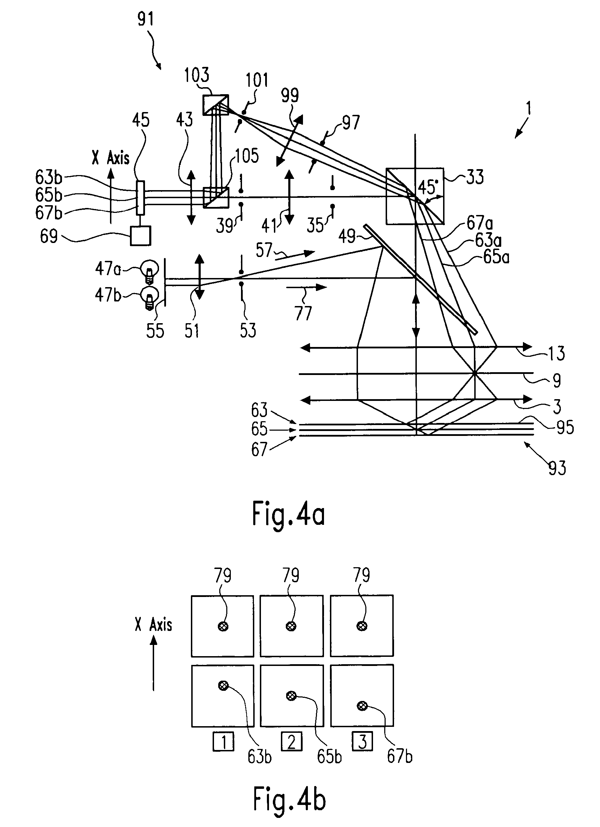

Fig. 4a illustrates a third embodiment of an optical device 91 according to the invention. The main difference of the third embodiment 91 compared to the second embodiment 71 illustrated in Fig. 3a is that the sample 5 is of a reflective type, like a Si wafer, and not of a diffusing type. Elements with the same reference numerals as employed in Fig. 3a and their features correspond to the ones of the second embodiment and are therefore not described again, but their description is incorporated herewith by reference. Parts of the Fourier optics set-up 1, not necessary to the understanding of the embodiment, have been omitted in Fig. 4a.

For the reflective sample 93, which does not show important Lambertian contributions when illuminated, the required optical system to achieve the same functionality (autofocusing) is a bit more complicated. Actually the way the sample 93 is illuminated is the same as for the illumination of sample 75 of Fig. 3a. Light beam 57 reaches the surface 95 of the sample under an oblique incidence and light beam 77 reaches the surface 95 under normal incidence. The collection of the normal incidence reflection spot 79 (Fig. 4b) on the detector 45 is made via the beamsplitter 33, the field of view delimiting diaphragm 35, the lens 41, the numerical aperture delimiting diaphragm 39 and the lens 43, just like in the previous embodiments. The collection of the oblique incidence reflection spot 63b, 65b, 67b on the detector is made with a second imaging system. At least a part of the oblique reflected beams 63a, 65a, 67a, whose position depend on the sample position 63, 65, 67 with respect to the in-focus position 37a is redirected by the beamsplitter 33 and reach the detector 45 via a second field of view delimiting diaphragm 97, a further lens 99, a second numerical aperture delimiting diaphragm 101, a mirror 103, a beamsplitter 105 and the lens 43.

The mirror 103 and the beamsplitter 105 of the second imaging system are included in order to recombine the normal incidence and oblique incidence beams before the last lens 43. For the person skilled in the art it is evident that this recombination of the two beams can also be achieved in further equivalent ways, e.g. the recombination could also occur after the lens 43 in which case it would be necessary to add a further lens in the second imaging system.

Like in the second embodiment the simultaneous detection of the calibrating normal incidence beam spot 79 and the sample position 63, 65, 67 related beam spot 63b, 65b, 67b enables the determination of the in-focus position 37a of the sample.

This embodiment is of particular interest for microelectronic samples where the diffusing character is generally very poor.

In the third embodiment the same advantageous embodiments, like illumination under different wavelengths, and the possibility of switching colours, etc. can be employed as for the first and second embodiments.

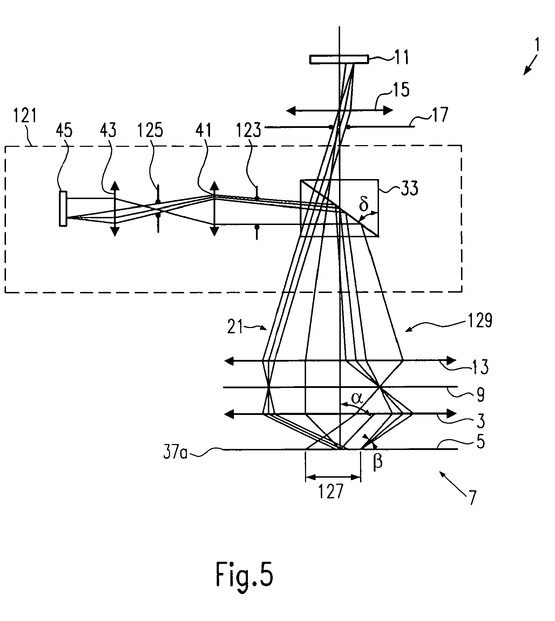

Fig 5 illustrates a fourth embodiment according to the invention. Reference numeral 1 again indicates the previously defined Fourier optics set-up and reference numeral 121 the fourth embodiment representing an imaging device to image the surface 5 of a sample 7. Again reference numerals already employed correspond to the elements and features already described with respect to embodiments one to three and the Fourier optics set-up of Fig. 1, the description thereof is introduced herewith by reference.

The imaging device 121 can be integrally formed with the Fourier optics set-up 1 or be an optical module on its own which can be mount onto the Fourier optics set-up 1. It is also possible to combine one optical device 31, 71, 91 for sample alignment purposes with one or more imaging devices 121 having different properties. In the following the description will be made for the imaging device 121 in the state of being mount onto or into the Fourier optics set-up 1. Furthermore it is assumed that sample 7 is positioned in-focus with respect to the Fourier optics.

The imaging device 121 comprises a beamsplitter 33 of a predetermined angle δ, a field of view delimiting diaphragm 123, arranged on the optical path to be essentially optically conjugated with the in-focus position 37a, a numerical aperture delimiting diaphragm 125, essentially optically conjugated with the first Fourier plane 9, and an imaging system comprising, in this embodiment, a set of two lenses 41, 43 used to re-image the field diaphragm 123 plane onto a one- or two-dimensional detector 45, e.g. a CMOS camera. Instead of a beamsplitter 33 also a retractably arranged mirror or any other suitable optical element may be used.

The field of view delimiting diaphragm 123 and the numerical aperture delimiting diaphragm 125 are both adjustable such that the field of view can adjusted so as to be able to image a certain area 127 of the sample surface 7 on the detector 45 and to let a certain angular range β around emission angle α reach the detector 45. Furthermore by choosing the beamsplitter angle δ light leaving the sample under the emission angle α will redirected by the beamsplitter 33 to reach the detector 45. As a consequence the direction under which the sample is imaged, the size of the imaging spot and the angular aperture can be independently defined in this imaging system. Typically spot sizes of smaller than 20µm are achieved and the range of incidence angles is of about 0° to 80°.

As such the imaging device is suitable for carrying out pattern recognition for thin films or CD measurements in micro electronic applications.

Fig. 5 does not represent an illumination system, however, a similar illumination system like illustrated in the Figs. 2a to 4a can also be used to illuminate sample 7 in this application. In the case of an emissive sample, like a display, no additional illumination system is necessary.

According to a variant (not shown) the imaging device 121 can furthermore comprise a beamsplitter exchange unit comprising several beamsplitters 33 with different beamsplitter angles δ to be capable of choosing different angles α under which one wants to image the surface 5 of the sample 7. This could be achieved by using a wheel unit which can be turned so as to position the whished beamsplitter in the emitted light beam 129.

As already described above a display characterization device or wafer inspection tool may comprise the Fourier optics set-up 1 to take advantage of the properties of the Fourier transform such that angle resolved data is imaged on different pixels a measurement sensor 11 and in addition an autofocusing device 31, 71, 91 according to one of the described embodiments to be able to optimise the sample position with respect to the focal plane of the Fourier optics. Furthermore the same optical arrangement can be used in combination with at least one imaging system 121 to also directly image the surface 5 of the sample 7 to be investigated. In the case of wafers it is advantageous to actually use to imaging devices one with a large field of about 0,75mm^{*}0,75mm to about 1,5mm to 1.5mm to be able to correctly position the wafer on the sample holder or wafer stage and one with a small field of about 50µm*50µm to about 250µm*250µm to perform CD metrology or similar measurements. Here the preferred direction under which imaging is carried out is normal incidence. Eventually it is also a possibility to combine one imaging device 121 and one optical device 31, 71, 91 into one device thereby sharing common optical elements.

## Claims

1. Optical device for determining the in-focus position of a Fourier optics set-up (1), comprising:
- a beamsplitter (33),
- a numerical aperture delimiting diaphragm (39),
- an imaging system (41, 43), and
- a detector (45),
which are arranged and configured such that the detector (45) is at an optically conjugated position with respect to the in-focus position (37a) of the Fourier optics set-up (1),
wherein the beamsplitter (33) has a predetermined angle (δ) configured to select a light beam (59) emitted from the surface (7) of a sample (5) to be positioned in the in-focus position (37a) of the Fourier optics set-up (1), under a predetermined emission angle (α) in conjunction with the numerical aperture delimiting diaphragm (39) and the imaging system (41, 43) to direct the selected light beam (59) onto the detector (45),
such that the signal measured by the detector (45) varies as a function of the position (63, 65, 67) of the sample (7) with respect to the in-focus position (37a) of the Fourier optics set-up (1).

2. Optical device according to claim 1, wherein the detector is at least a one dimensional detector and the field of view of the optical device is larger than an illumination spot size (19) or light emission spot size on the surface (5) of the sample (7) such that depending on the position (63, 65, 67) of the sample (7) with respect to the in-focus position (37a) of the Fourier optics set-up (1) the selected light beam (57) is detected at different positions (63b, 65b, 67b) on the at least one dimensional detector (45).

3. Optical device according to claim 1 or 2, further comprising a sample illumination device configured to illuminate the sample (7) with two light beams (57, 77) under two different incident angles, wherein a first incident angle is chosen such that the detected position (79) on the detector (45) of the corresponding light beam emitted from the sample (7) is essentially independent of the position (63, 65, 67) of the sample (7) with respect to the in-focus position (37a) of the Fourier optics set-up (1).

4. Optical device according to claim 3, wherein the two light beams (57, 77) have different colour with respect to each other.

5. Optical device according to claim 4, wherein the illumination device is configured such that the colours of the two light beams (57, 77) are adjustable.

6. Optical device according to one of claims 3 to 5, wherein the illumination device is configured such that the second incident angle (α) is adjustable.

7. Optical device according to one of claims 3 to 6, further comprising a second numerical aperture delimiting diaphragm (101) and a second imaging system (99), configured and arranged such that in conjunction with the predetermined angle of the beamsplitter (33) the light beam (77) corresponding to the first incident angle reaches the detector (45) via the first numerical aperture delimiting diaphragm (39) and the first imaging system (41, 43), whereas the light beam (63a, 65a, 67a) corresponding to the second incident angle reaches the detector (45) via the second numerical aperture delimiting diaphragm (101) and the second imaging system (99).

8. Optical device according to claim 7, wherein the first or second imaging system comprises a mirror (103) and a beamsplitter (105) configured and arranged such that the light beam (77) corresponding to the first incident angle and the light beam (63a, 65a, 67a) corresponding to the second incident angle recombine prior to reaching the detector (45).

9. Optical device according to one of claims 1 to 8, further comprising an image analysing unit (69) configured to receive electrical signals from the detector (45) which are proportional to the light intensity distribution detected, and configured to determine the position (63b, 65b, 67b) of the light beam(s) (63a, 65a, 67a) emitted from the sample (5).

10. Optical device according to claim 9 in combination with one of claims 3 to 8,
wherein the image analysing unit (69) is further configured to determine the in-focus position (37a) of the sample (7) by comparing the positions (79, 63b, 65b, 67b) of the two light beams on the detector (45).

11. Optical device according to one of claims 1 to 10, wherein the numerical aperture delimiting diaphragm (39) is adjustable.

12. Optical device according to one of claims 1 to 11, further comprising an adjustable field of view delimiting diaphragm (35).

13. Optical device according to claim 12, wherein the imaging system comprises two objectives (41, 43) arranged and configured such that the field of view diaphragm plane is re-imaged on the detector (45).

14. Imaging device for a Fourier optics set-up, comprising:
- a beamsplitter (33),
- an adjustable field of view delimiting diaphragm (123),
- an adjustable numerical aperture delimiting diaphragm (125),
- an imaging system (41, 43), and
- a two dimensional detector (45),
which are arranged and configured such that the detector (45) is at an optically conjugated position with respect to a in-focus position (37a) of the Fourier optics set-up (1), and
wherein the beamsplitter (33) has a predetermined angle (δ) configured to select a light beam emitted from the surface (5) of the sample (7) under a predetermined emission angle (α) in conjunction with the numerical aperture delimiting diaphragm (125) and the imaging system (41, 43) to thereby image the surface (5) of the sample (7) along the direction corresponding to the predetermined emission angle (α).

15. Imaging device according to claim 14, further comprising a beamsplitter exchange unit comprising a plurality of beamsplitters with different predetermined angles such that depending on which beamsplitter is positioned in the light beam emitted from the surface of the sample the surface of the sample is imagined along the direction corresponding to the predetermined emission angle (α) of the beamsplitter.

16. Fourier optics set-up comprising an optical device for determining the in-focus position of the Fourier optics set-up.

17. Fourier optics set-up comprising an optical device according to one of claims 1 to 13 and/or at least one imaging device according to claim 14 or 15.

18. Fourier optics set-up according to claim 17, comprising two imaging devices,
wherein one imaging device has a large field of view, in particular a field of view in a range of 0.75mm*0.75mm to 1.5mm*1.5mm, and wherein the second imaging device has a smaller field of view, in particular a field of view in a range of 50µm*50µm to about 250µm*250µm.

19. Method for determining the in-focus position of a Fourier optics set-up comprising a sample holder, a first (3) and a second optical system (13, 15), a measurement sensor (11) and an optical device (31, 71, 91) according to one of claims 1 to 13, which are configured and arranged such
- that the first optical system (13) forms a Fourier transform image of a surface (5) of a sample (7) positioned on the sample holder on its focal image plane,
- that the focal image plane (9) of the first optical system (3) is imaged by the second optical system (13) onto the measurement sensor (11), and
- that the sample holder and the first optical system (3) can be moved relative to each other,
comprising the step of:
- moving the sample holder together with a sample (7) positioned thereon with respect to the first optical system (3) until the position of the light beam (63b, 65b, 67b) on the detector (45) corresponds to a predetermined position indicating the in-focus position (37a) of the sample (7) with respect to the first optical system (3).

20. Method for determining the in-focus position according to claim 19, wherein the Fourier optical set-up (1) comprises an optical device (71, 91) according to claim 3, and wherein the position indicating the in-focus position is determined by the position of the light-beam whose position (79) on the detector (45) is independent of the position (63, 65, 67) of the sample (7) with respect to the in-focus position (37a) of the Fourier optics set-up (1).
